# FASCICULE DE BREVET EUROPEEN

(11) **EP 3 204 650 B1**
(45) Date de publication et mention de la délivrance du brevet: **19.01.2022**
(21) Numéro de dépôt: 15788159.0
(22) Date de dépôt: 08.10.2015
(51) Int. Cl.: F04D 29/053, F04D 29/26, F04D 29/28, F04D 29/66, F04D 17/12, F04D 29/02, F04D 25/16

(54) **TURBOMACHINE TOURNANT À DES VITESSES ÉLEVÉES**
MIT HOHER GESCHWINDIGKEIT UMLAUFENDE TURBOMASCHINE
TURBOMACHINE ROTATING AT HIGH SPEEDS

(30) Priorité: 09.10.2014 FR 1459699
(43) Date de publication de la demande: 16.08.2017
(73) Titulaire: Cryostar SAS, 68220 Hesingue (FR)
(72) Inventeur: DALLER, René, 68570 Soultzmatt (FR); WALCH, Joseph, 68390 Sausheim (FR)
(74) Mandataire: Meilinger, Claudia Sabine
(86) Numéro de dépôt international: PCT/FR2015/052716
(87) Numéro de publication internationale: WO 2016/055745

(56) Documents cités:
- FR-A1- 2 969 722
- US-A- 4 336 856
- US-A- 5 356 273
- US-A1- 2003 017 878
- US-A1- 2007 292 268
- US-A1- 2011 091 324
- US-A1- 2011 262 284
- None

## Description

La présente invention concerne une turbomachine tournant à des vitesses élevées présentant une roue centrifuge. Elle concerne un compresseur ou une turbine radiale.

Dans une machine de type compresseur-turbine, appelée aussi compander (mot obtenu à partir des mots anglais compressor pour compresseur et expandeur pour turbine ou détendeur), on trouve un ou plusieurs compresseur(s) centrifuge(s) et une ou plusieurs turbine(s). Ces divers étages sont par exemple reliés mécaniquement à un moteur commun (éventuellement une génératrice commune) par l'intermédiaire d'un ensemble d'engrenages appelé par exemple boite de vitesses.

La même boite de vitesses et la même architecture de machine peut être utilisée pour des applications différentes avec des puissances différentes. Il convient alors d'adapter les roues de compresseur et de turbine à la nouvelle application. Les vitesses de rotation au niveau des roues centrifuges peuvent être très élevées. Il arrive alors que le régime de fonctionnement d'une ou plusieurs roue(s) de la machine tournante soit un régime super-critique, c'est-à-dire dans un mode de fonctionnement au-dessus du premier mode de flexion de l'arbre portant la roue.

Quand on est amené à modifier pour une nouvelle application une ou plusieurs roue(s) équipant une machine tournante, les caractéristiques de la nouvelle machine peuvent varier, notamment en ce qui concerne le premier mode de flexion des arbres de la machine. Si la roue centrifuge qui vient remplacer la roue centrifuge d'origine est plus légère, alors la vitesse critique, correspondant au premier mode de flexion, augmente. Il convient alors d'éviter que cette vitesse critique ne rentre dans la plage d'utilisation de la machine concernée.

Le document US2011091324 concerne un rotor d'une turbomachine, en particulier un turbocompresseur à gaz d'échappement, comportant une roue de rotor comprenant une partie arrière de roue et comportant un arbre rotor comprenant une pièce intermédiaire via laquelle l'arbre rotor est relié de manière rigide à la roue de rotor, la pièce intermédiaire étant dotée d'un plateau d'équilibre présentant la forme d'un disque, dont le diamètre extérieur est supérieur au diamètre maximal de l'arbre rotor et qui est fixé sur la partie arrière de roue de la roue de rotor.

Le document FR2969722 concerne quant à lui un groupe motocompresseur comprenant un moteur et un compresseur montés dans un carter commun étanche aux gaz à comprimer. Le moteur comprend un rotor lié en rotation avec un rotor du compresseur. Ce dernier comporte un arbre principal et un arbre de liaison coaxial avec l'arbre principal, l'arbre de liaison étant disposé au moins en partie à l'intérieur de l'arbre principal de manière à être

La présente invention a alors pour but de permettre l'utilisation dans une machine tournante, pour un compresseur ou une turbine, associée à une boite de vitesses déjà préexistante, de roues de tout type, notamment des roues plus petites et/ou plus légères, même à des vitesses élevées tout en évitant toutefois d'avoir une vitesse critique dans la plage de fonctionnement voulue.

Un autre but de la présente invention est de permettre d'utiliser une roue donnée sur une plage de vitesses plus importante sans risquer de rentrer dans un régime super-critique sans avoir à modifier ladite roue (qui reste donc utilisable).

À cet effet, la présente invention propose une turbomachine telle que définie dans la revendication 1.

L'utilisation d'un disque inertiel comme mentionné ici permet d'avoir un rotor, formé par les pièces tournantes incluant la roue centrifuge et le disque inertiel, avec des propriétés dynamiques adaptées à l'utilisation que l'on souhaite faire de la roue centrifuge. Il est ainsi possible avec par exemple une roue centrifuge en alliage léger d'atteindre des vitesses de rotation élevées sans avoir de zone de vitesses critiques dans la plage d'utilisation souhaitée. Lorsque la roue du rotor est remplacée par une roue présentant des caractéristiques différentes, le disque inertiel peut lui aussi être remplacé si nécessaire par un autre disque dont les caractéristiques, notamment la masse, seront adaptées à la nouvelle roue.

Dans une telle machine tournante, la roue est par exemple réalisée dans un alliage à base d'aluminium. Le disque inertiel quant à lui présente de préférence une densité supérieure à 15 kg/dm³. Il peut être par exemple réalisé en tungstène ou dans un alliage à base de tungstène.

Dans une turbomachine telle que décrite ci-dessus, le disque inertiel peut être monté par serrage entre la roue et l'arbre.

Dans une forme de réalisation préférée, il est prévu que la liaison entre l'arbre et le disque inertiel soit similaire à la liaison entre le disque inertiel et la roue de telle sorte que la roue puisse être reliée à l'arbre sans la présence du disque. Ainsi, le disque pourra être retiré si la turbomachine est utilisée à des vitesses suffisamment basses pour qu'il n'y ait pas de risque que la turbomachine fonctionne en régime super-critique.

L'entrainement du disque peut se faire par friction. Toutefois, il peut être prévu, dans une forme de réalisation préférée, que le disque soit relié à la roue par une denture radiale de type denture Hirth. Ce montage permet une transmission d'un couple élevé et assure un très bon alignement du disque avec la roue centrifuge.

De même, on prévoit de préférence que le disque est relié à l'arbre moteur par une denture radiale de type denture Hirth. Ici aussi, on a une bonne transmission de couple avec un bon alignement des éléments.

Pour limiter les frictions avec le milieu ambiant, le diamètre du disque inertiel est avantageusement inférieur au diamètre de la roue.

Le disque et la roue étant montés en bout de l'arbre,un goujon est fixé sur l'arbre de manière à prolonger axialement celui-ci, et que le disque et la roue sont bridés contre l'extrémité de l'arbre à l'aide d'un écrou vissé sur une extrémité filetée du goujon opposée à l'arbre. On peut aussi prévoir éventuellement que le goujon soit vissé dans un logement axial borgne taraudé et débouchant dans une face frontale de l'arbre recevant le disque. Dans cette dernière variante, un embout profilé vient recouvrir l'écrou de manière à ne pas perturber le flux d'air (ou autre fluide) de la roue correspondante.

La présente invention concerne également un compresseur turbine, ou compander, caractérisé en ce qu'il comporte au moins une machine tournante telle que décrite ci-dessus. Un tel compresseur turbine comporte par exemple trois compresseurs centrifuges et une turbine reliés mécaniquement à un moteur commun par l'intermédiaire d'un train d'engrenages.

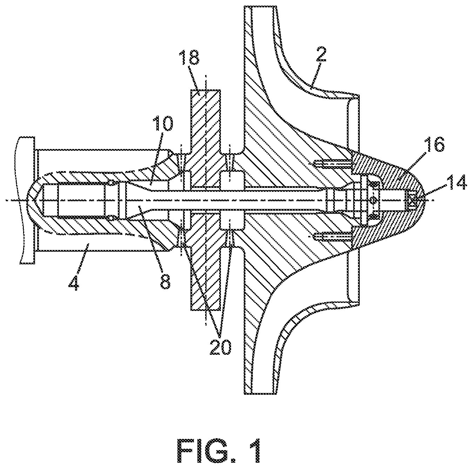

Des détails et avantages de la présente invention apparaitront mieux de la description qui suit, faite en référence au dessin schématique annexé sur lequel :
La figure unique illustre un compresseur selon la présente invention.

On reconnait sur cette figure une roue centrifuge 2, par exemple réalisée dans un alliage léger à base d'aluminium, montée sur un arbre qui est par exemple un arbre moteur 4 (dans le cas où de l'énergie est fournie à la roue centrifuge : il pourrait s'agir aussi d'un arbre mené par la roue centrifuge si celle-ci correspond à une turbine). L'arbre moteur 4 est par exemple relié à un moteur (non illustré) par l'intermédiaire d'un train d'engrenages appelé par la suite boite de vitesses (non représentée).

La roue centrifuge 2 est montée sur l'arbre moteur 4, en bout d'arbre, par l'intermédiaire d'un goujon 8. Ce dernier présente une première extrémité filetée vissée dans un trou taraudé10 longitudinal réalisé en bout d'arbre moteur 4 et vient ainsi prolonger axialement l'arbre moteur 4. L'autre extrémité du goujon 8 est elle aussi filetée et reçoit un écrou 14. Lors du vissage de cet écrou 14 sur le goujon 8, on vient exercer une traction sur le goujon 8, ce qui permet de réaliser un montage avec précontrainte de la roue centrifuge 2. Un embout profilé 16, appelé aussi nez de roue, vient recouvrir l'écrou 14 pour favoriser l'écoulement de fluide au niveau de la roue centrifuge 2. Un tel montage est un exemple de montage connu de l'homme du métier mais d'autres montages connus d'une roue sur un arbre pourraient être utilisés ici.

Dans l'exemple illustré, on remarque la présence d'un disque 18 entre l'arbre moteur 4 et la roue centrifuge 2. Ce disque 18 est réalisé dans un matériau présentant une densité supérieure à celle du matériau utilisé pour réaliser la roue centrifuge 2.

Dans la forme de réalisation préférée illustrée, le disque 18 est inséré entre l'arbre moteur 4 et la roue centrifuge 2 et le bridage de la roue centrifuge 2 réalise ainsi le bridage du disque 18. Le montage de l'ensemble formé par le disque 18 et la roue 2 peut être effectué comme expliqué ci-dessus à l'aide d'un goujon 8 et par bridage par un écrou 14. On réalise ainsi un montage entièrement démontable permettant de réaliser facilement un changement de disque 18 et/ou de roue 2.

La transmission du couple entre la roue centrifuge 2 et l'arbre moteur 4 se fait par l'intermédiaire du disque 18. Plusieurs variantes sont possibles ici. Dans le montage proposé ici où le disque 18 est bridé entre la roue centrifuge 2 et l'arbre moteur 4, un simple entrainement par friction est possible. De préférence, on utilise le même accouplement entre le disque 18 et la roue centrifuge 2 et entre l'arbre moteur 4 et le disque 18 que l'accouplement prévu à l'origine (sans le disque 18) entre la roue centrifuge 2 et l'arbre moteur 4. Dans la forme de réalisation illustrée, on a à chaque fois un accouplement par des dentures radiales 20, également connues sous le nom de dentures Hirth. Ainsi des dentures Hirth sont réalisées, d'une part, entre l'arbre moteur 4 et le disque 18 et, d'autre part, entre le disque 18 et la roue centrifuge 2. Ce type d'accouplement permet un excellent entrainement et permet aussi un bon alignement des pièces.

Le disque 18 est réalisé dans un matériau dense, présentant une densité supérieure par exemple à 15 (c'est-à-dire une masse volumique supérieure à 15 kg/dm⁻³). Il est par exemple fabriqué dans un alliage à base de tungstène.

Pour pouvoir être intégré dans la turbomachine sans souci ainsi que pour limiter les frictions dues au disque, on prévoit que le diamètre du disque 18 reste inférieur au diamètre extérieur de la roue centrifuge 2.

La présence du disque 18 permet d'adapter les fréquences propres de l'ensemble tournant de manière à adapter les vitesses de rotation critiques et notamment éviter que la plage nominale de fonctionnement de la machine comporte de telles vitesses de rotation critiques.

La roue centrifuge 2 est destinée à tourner à des vitesses élevées, supérieures à 20.000 tr.min⁻¹, voire supérieures à 40.000 tr.min⁻¹. En lui adjoignant le disque 18 additionnel, il est possible d'abaisser le premier mode de flexion correspondant à la première vitesse critique en deçà de la plage d'opération de la machine tournante en changeant les propriétés physiques de l'ensemble tournant, ou rotor. Bien entendu, pour de telles vitesses de rotation, un équilibrage, de préférence dynamique, de chaque élément de l'ensemble formé par le disque 18 et la roue centrifuge 2 est réalisé.

Le fait d'utiliser un matériau dense pour la réalisation du disque 18 permet de limiter l'encombrement du disque 18 et donc de l'ensemble monté et permet de limiter aussi les pertes par friction lors de l'utilisation de la machine tournante.

Il est possible d'utiliser une roue de compresseur ou de détendeur déjà existante avec une boîte de vitesses donnée sans avoir à toucher à la roue (ni à la boite de vitesses). Il suffit de lui adjoindre le disque additionnel comme décrit plus haut pour adapter les propriétés dynamiques du rotor ainsi obtenu aux conditions d'utilisation prévues.

Dans la forme de réalisation décrite ci-dessus, il convient de choisir un disque de masse adaptée et un goujon suffisamment long pour recevoir à la fois le disque additionnel et la roue. Cette dernière se monte alors sur l'arbre moteur de la même manière que sans disque, à la seule exception près qu'il convient justement de ne pas oublier de venir intercaler ce disque entre l'arbre moteur et la roue lors du montage de cette dernière.

On remarque aussi que seul le goujon utilisé dans la forme de réalisation ci-dessus doit être modifié pour le montage de la roue par rapport à un montage sans disque additionnel.

Un compresseur ou une turbine avec une roue centrifuge et un disque inertiel peut être par exemple utilisé dans un compresseur-turbine, appelé aussi compander. À chaque étage de compression et de détente correspond alors une roue centrifuge et toutes les roues sont entrainées par l'intermédiaire d'une boite de vitesses commune à tous les étages. Dans un tel compander, on a par exemple trois étages de compression et un étage de détente.

Bien entendu, la présente invention ne se limite pas à la forme de réalisation préférée décrite ci-dessus et illustrée sur le dessin mais elle concerne également toutes les variantes évoquées et celles à la portée de l'homme du métier dans le cadre des revendications ci-après.

## Revendications

1. Turbomachine comportant une roue (2) d'un compresseur centrifuge ou d'une turbine radiale montée sur un arbre (4), la turbomachine comporte en outre un disque inertiel (18) adjacent à la roue (2) et monté de manière démontable entre la roue et l'arbre, le disque inertiel (18) étant réalisé dans un matériau d'une densité supérieure à celle du matériau utilisé pour la fabrication de la roue (2), et le disque inertiel (18) et la roue (2) sont montés en bout d'arbre dans une telle manière que la transmission du couple entre la roue (2) et l'arbre (4) se fait par l'intermédiaire du disque inertiel (18).

2. Turbomachine selon la revendication 1, **caractérisée en ce que** la roue (2) est réalisée dans un alliage à base d'aluminium.

3. Turbomachine selon l'une des revendications 1 ou 2, **caractérisée en ce que** le disque inertiel (18) présente une densité supérieure à 15 kg/dm³.

4. Turbomachine selon la revendication 3, **caractérisée en ce que** le disque inertiel (18) est réalisé en tungstène ou dans un alliage à base de tungstène.

5. Turbomachine selon l'une des revendications 1 à 4, **caractérisée en ce que** le disque inertiel (18) est monté par serrage entre la roue (2) et l'arbre (4).

6. Turbomachine selon l'une des revendications 1 à 5, **caractérisée en ce que** la liaison entre l'arbre (4) et le disque inertiel (18) est similaire à la liaison entre le disque inertiel (18) et la roue (2) de telle sorte que la roue (2) puisse être reliée à l'arbre (4) sans la présence du disque inertiel (18).

7. Turbomachine selon l'une des revendications 1 à 6, **caractérisée en ce que** le disque inertiel (18) est relié à la roue (2) par une denture radiale (20) de type denture Hirth.

8. Turbomachine selon l'une des revendications 1 à 7, **caractérisée en ce que** le disque inertiel (18) est relié à l'arbre (4) par une denture radiale (20) de type denture Hirth.

9. Turbomachine selon l'une des revendications 1 à 8, **caractérisée en ce que** le diamètre du disque inertiel (18) est inférieur au diamètre de la roue (2).

10. Turbomachine selon l'une des revendications 1 à 9, **caractérisée en ce qu'**un goujon (8) est fixé sur l'arbre de manière à prolonger axialement celui-ci, et **en ce que** le disque inertiel (18) et la roue (2) sont bridés contre l'extrémité de l'arbre (4) à l'aide d'un écrou (14) vissé sur une extrémité filetée du goujon (8) opposée à l'arbre (4).

11. Turbomachine selon la revendication 10, **caractérisée en ce que** le goujon (8) est vissé dans un logement (10) axial borgne taraudé et débouchant dans une face frontale de l'arbre (4) recevant le disque inertiel (18).

12. Turbomachine selon la revendication 11, **caractérisée en ce qu'**un embout profilé (16) vient recouvrir l'écrou (14).

13. Compresseur turbine, **caractérisé en ce qu'**il comporte au moins une turbomachine selon l'une des revendications 1 à 12.

14. Compresseur turbine selon la revendication 13, **caractérisé en ce qu'**il comporte trois compresseurs centrifuges et une turbine reliés mécaniquement à un moteur commun par l'intermédiaire d'un train d'engrenages.

## Patentansprüche

1. Turbomaschine, umfassend ein Rad (2) eines Zentrifugalkompressors oder einer Radialturbine, das auf einer Welle (4) montiert ist, wobei die Turbomaschine ferner eine Trägheitsscheibe (18) neben dem Rad (2) umfasst und die zwischen dem Rad und der Welle abnehmbar montiert ist, wobei die Trägheitsscheibe (18) aus einem Material mit einer Dichte besteht, die größer ist als die des zur Herstellung des Rades (2) verwendeten Materials, und wobei die Trägheitsscheibe (18) und das Rad (2) derart am Wellenende montiert sind, dass die Drehmomentübertragung zwischen dem Rad (2) und der Welle (4) über die Trägheitsscheibe (18) erfolgt.

2. Turbomaschine nach Anspruch 1, **dadurch gekennzeichnet, dass** das Rad (2) aus einer Legierung auf Aluminiumbasis besteht.

3. Turbomaschine nach einem der Ansprüche 1 oder 2, **dadurch gekennzeichnet, dass** die Trägheitsscheibe (18) eine Dichte von mehr als 15 kg/dm³ aufweist.

4. Turbomaschine nach Anspruch 3, **dadurch gekennzeichnet, dass** die Trägheitsscheibe (18) aus Wolfram oder aus einer Legierung auf Wolframbasis besteht.

5. Turbomaschine nach einem der Ansprüche 1 bis 4, **dadurch gekennzeichnet, dass** die Trägheitsscheibe (18) durch Klemmung zwischen dem Rad (2) und der Welle (4) montiert ist.

6. Turbomaschine nach einem der Ansprüche 1 bis 5, **dadurch gekennzeichnet, dass** die Verbindung zwischen der Welle (4) und der Trägheitsscheibe (18) ähnlich der Verbindung zwischen der Trägheitsscheibe (18) und dem Rad (2) ist, so dass das Rad (2) mit der Welle (4) ohne Vorhandensein der Trägheitsscheibe (18) verbunden werden kann.

7. Turbomaschine nach einem der Ansprüche 1 bis 6, **dadurch gekennzeichnet, dass** die Trägheitsscheibe (18) mit dem Rad (2) durch eine radiale Verzahnung (20) des Typs Hirth-Verzahnung verbunden ist.

8. Turbomaschine nach einem der Ansprüche 1 bis 7, **dadurch gekennzeichnet, dass** die Trägheitsscheibe (18) mit der Welle (4) durch eine radiale Verzahnung (20) des Typs Hirth-Verzahnung verbunden ist.

9. Turbomaschine nach einem der Ansprüche 1 bis 8, **dadurch gekennzeichnet, dass** der Durchmesser der Trägheitsscheibe (18) kleiner als der Durchmesser des Rades (2) ist.

10. Turbomaschine nach einem der Ansprüche 1 bis 9, **dadurch gekennzeichnet, dass** auf der Welle ein Bolzen (8) so fixiert ist, dass er diese axial verlängert, **und dass** die Trägheitsscheibe (18) und das Rad (2) gegen das Ende der Welle (4) mit Hilfe einer Mutter (14), die auf ein Gewindeende des Bolzens (8) gegenüber der Welle (4) aufgeschraubt ist, angeflanscht ist.

11. Turbomaschine nach Anspruch 10, **dadurch gekennzeichnet, dass** der Bolzen (8) in eine axiale Aufnahme (10) mit einem Gewindesackloch eingeschraubt wird und in eine die Trägheitsscheibe (18) aufnehmende Stirnfläche der Welle (4) mündet.

12. Turbomaschine nach Anspruch 11, **dadurch gekennzeichnet, dass** ein profiliertes Endstück (16) die Mutter (14) überdeckt.

13. Turbinenkompressor, **dadurch gekennzeichnet, dass** er mindestens eine Turbomaschine nach einem der Ansprüche 1 bis 12 umfasst.

14. Turbinenkompressor nach Anspruch 13, **dadurch gekennzeichnet, dass** er drei Zentrifugalkompressoren und eine Turbine umfasst, die über ein Getriebe mechanisch mit einem gemeinsamen Motor verbunden sind.

## Claims

1. A turbomachine comprising a wheel (2) of a centrifugal compressor or a radial turbine mounted on a shaft (4), the turbomachine further comprises an inertial disc (18) adjacent to the wheel (2) and mounted in a removable manner between the wheel and the shaft, the inertial disc (18) being made of a material with a density greater than that of the material used for the manufacture of the wheel (2), and the inertial disc (18) and the wheel (2) are mounted at the end of the shaft in such a way that the torque transmission between the wheel (2) and the shaft (4) occurs via the inertial disc (18).

2. The turbomachine according to claim 1, **characterized in that** the wheel (2) is made from an aluminum-based alloy.

3. The turbomachine according to one of claims 1 or 2, **characterized in that** the inertial disc (18) has a density greater than 15 kg/dm³.

4. The turbomachine according to claim 3, **characterized in that** the inertial disc (18) is made of tungsten or a tungsten-based alloy.

5. The turbomachine according to one of claims 1 to 4, **characterized in that** the inertial disc (18) is mounted by clamping between the wheel (2) and the shaft (4).

6. The turbomachine according to one of claims 1 to 5, **characterized in that** the connection between the shaft (4) and the inertial disc (18) is similar to the connection between the inertial disc (18) and the wheel (2) so that the wheel (2) can be connected to the shaft (4) without the presence of the inertial disc (18).

7. The turbomachine according to one of claims 1 to 6, **characterized in that** the inertial disc (18) is connected to the wheel (2) by a radial toothing (20) of the Hirth-toothing type.

8. The turbomachine according to one of claims 1 to 7, **characterized in that** the inertial disc (18) is connected to the shaft (4) by a radial toothing (20) of the Hirth-toothing type.

9. The turbomachine according to one of claims 1 to 8, **characterized in that** the diameter of the inertial disc (18) is less than the diameter of the wheel (2).

10. The turbomachine according to one of claims 1 to 9, **characterized in that** a stud (8) is fixed on the shaft so as to extend it axially, and **in that** the inertial disc (18) and the wheel (2) are clamped against the end of the shaft (4) using a nut (14) screwed onto a threaded end of the stud (8) opposite to the shaft (4).

11. The turbomachine according to claim 10, **characterized in that** the stud (8) is screwed into a threaded blind axial housing (10) and opening into a front face of the shaft (4) receiving the inertial disc (18).

12. The turbomachine according to claim 11, **characterized in that** a profiled tip (16) covers the nut (14).

13. A turbine compressor, **characterized in that** it comprises at least one turbomachine according to one of claims 1 to 12.

14. The turbine compressor according to claim 13, **characterized in that** it has three centrifugal compressors and a turbine mechanically connected to a common motor via a gear train.
